(19) Europäisches Patentamt / European Patent Office / Office européen des brevets

(11) **EP 4 186 880 A1**

(12) **EUROPÄISCHE PATENTANMELDUNG**

(43) Veröffentlichungstag:
31.05.2023 Patentblatt 2023/22

(21) Anmeldenummer: 21210702.3

(22) Anmeldetag: 26.11.2021

(51) Internationale Patentklassifikation (IPC):
**C04B 37/02** (2006.01) **B23K 35/30** (2006.01)

(52) Gemeinsame Patentklassifikation (CPC):
**C04B 37/026; B23K 35/262; B23K 35/264;
B23K 35/302;** B23K 35/025; C04B 2235/6562;
C04B 2235/6565; C04B 2235/6567;
C04B 2235/9623; C04B 2237/124; C04B 2237/126;
C04B 2237/127; C04B 2237/343; C04B 2237/366;
C04B 2237/368; (Forts.)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Heraeus Deutschland GmbH & Co. KG
63450 Hanau (DE)

(72) Erfinder:
• Schwöbel, Andre
63450 Hanau (DE)

• Schnee, Daniel
63450 Hanau (DE)
• Dr. Niewolak, Leszek
63450 Hanau (DE)
• Dr. Rauer, Miriam
63450 Hanau (DE)
• Dr. Denadic, Ruzica
63450 Hanau (DE)

(74) Vertreter: Heraeus IP
Heraeus Business Solutions GmbH
Intellectual Property
Heraeusstraße 12-14
63450 Hanau (DE)

(54) **METALL-KERAMIK-SUBSTRAT, VERFAHREN ZU DESSEN HERSTELLUNG UND MODUL**

(57) Die Erfindung betrifft ein Metall-Keramik-Substrat. Eine Aufgabe besteht darin, ein Metall-Keramik-Substrat bereitzustellen, das eine Verbindung zwischen der Metallschicht und dem Keramikkörper mit hoher Stabilität und eine hohe Wärme- und Stromleitfähigkeit aufweist. Das Metall-Keramik-Substrat umfasst (a) einen Keramikkörper, (b) eine Metallschicht und (c) eine Verbindungsschicht, die sich zwischen dem Keramikkörper und der Metallschicht befindet, wobei die Verbindungsschicht (i) ein Metall M1 mit einem Schmelzpunkt von wenigstens 700°C, (ii) ein Metall M2 mit einem Schmelzpunkt von weniger als 700°C, (iii) ein Metall M3, das aus der Gruppe der Aktivmetalle ausgewählt ist, und (iv) ein Metall M4, das aus der Gruppe ausgewählt ist, die aus Bismut, Gallium, Zink, Indium, Germanium, Aluminium und Magnesium besteht, aufweist, wobei die Verbindungsschicht folgende Merkmale aufweist: (c1) $M(M2)_{EDX} = 10{-}20$ Gewichtsprozent, (c2) $15$ Gewichtsprozent $\leq [M(M4)/M(M2)]_{ICP} * 1000$ Gewichtsprozent + $M(M2)_{EDX} \leq 100$ Gewichtsprozent und (c3) $M(Ag)_{EDX} < 10$ Gewichtsprozent. Das Metall M3 ist aus der Gruppe ausgewählt, die aus Hafnium, Titan, Zirkonium, Niob, Tantal, Vanadium und Cer besteht. Metall M1 ist Kupfer. Metall M2 ist Zinn.

Fig. 1

**(Forts. nächste Seite)**

(52) Gemeinsame Patentklassifikation (CPC): (Forts.)
C04B 2237/407; C04B 2237/55; C04B 2237/568;
C04B 2237/704; C04B 2237/706; C04B 2237/708

**Beschreibung**

Die vorliegende Erfindung betrifft ein Metall-Keramik-Substrat, ein Verfahren zur Herstellung eines Metall-Keramik-Substrats und ein Modul aufweisend ein Metall-Keramik-Substrat.

Metall-Keramik-Substrate spielen eine wichtige Rolle im Bereich der Leistungselektronik. Sie sind ein maßgebliches Element beim Aufbau von elektronischen Bauteilen und sorgen für eine schnelle Ableitung hoher Wärmemengen beim Betrieb dieser Bauteile. Metall-Keramik-Substrate bestehen üblicherweise aus einer Keramikschicht und einer Metallschicht, die mit der Keramikschicht verbunden ist.

Zur Verbindung der Metallschicht mit der Keramikschicht sind aus dem Stand der Technik mehrere Verfahren bekannt. Beim sogenannten DCB ("Direct Copper Bonding") -Verfahren wird eine Kupferfolie durch Reaktion von Kupfer mit einem Reaktivgas (üblicherweise Sauerstoff) oberflächlich mit einer Kupferverbindung (üblicherweise Kupferoxid) versehen, die einen niedrigeren Schmelzpunkt als Kupfer aufweist. Wenn die so behandelte Kupferfolie auf einen Keramikkörper aufgebracht und der Verbund gebrannt wird, schmilzt die Kupferverbindung und benetzt die Oberfläche des Keramikkörpers, so dass es zu einer stabilen stoffschlüssigen Verbindung zwischen der Kupferfolie und dem Keramikkörper kommt. Dieses Verfahren ist zum Beispiel in der US 3744120 A oder der DE 2319854 C2 beschrieben.

Trotz offensichtlicher Vorteile weist das DCB-Verfahren zwei Hauptnachteile auf. Erstens muss das Verfahren bei relativ hohen Temperaturen durchgeführt werden, nämlich etwas unterhalb des Schmelzpunktes von Kupfer. Zweitens kann das Verfahren nur für Keramiken auf Oxidbasis wie Aluminiumoxid oder oberflächlich oxidiertes Aluminiumnitrid verwendet werden. Daher besteht ein Bedarf an einem alternativen Verfahren zur Herstellung von Metall-Keramik-Substraten unter weniger strengen Bedingungen. In einem alternativen Verfahren können Metallfolien bei Temperaturen von etwa 650 bis 1000°C mit Keramikkörpern verbunden werden, wobei ein spezielles Lot verwendet wird, das ein Metall mit einem Schmelzpunkt von wenigstens 700°C (üblicherweise Silber) und ein Aktivmetall enthält. Die Rolle des Aktivmetalls besteht darin, mit dem Keramikmaterial zu reagieren und so eine Verbindung des Keramikmaterials mit dem übrigen Lot unter Bildung einer Reaktionsschicht zu ermöglichen, während das Metall mit einem Schmelzpunkt von wenigstens 700°C zur Verbindung dieser Reaktionsschicht mit der Metallfolie dient. So schlägt zum Beispiel die JP4812985 B2 vor, eine Kupferfolie mit einem Keramikkörper unter Verwendung eines Lotes zu verbinden, das 50 bis 89 Gewichtsprozent Silber sowie darüber hinaus Kupfer, Bismut und ein Aktivmetall enthält. Mit diesem Verfahren gelingt es, die Kupferfolie mit dem Keramikkörper stabil zu fügen.

Um Probleme im Zusammenhang mit der Migration von Silber zu vermeiden, kann es vorteilhaft sein, silberfreie Lote zur Verbindung von Metallfolien mit Keramikkörpern zu verwenden. Diese Lote basieren zum Beispiel auf hochschmelzenden Metallen (insbesondere Kupfer), niedrigschmelzenden Metallen (wie Bismut, Indium oder Zinn) und Aktivmetallen (wie Titan). Eine solche Technik wird zum Beispiel in der DE 102017114893 A1 vorgeschlagen. Diese Technik führt im Grunde zu einer neuen, eigenständigen Verbindungsklasse, da die Basis der verwendeten Lote durch ein anderes Metall (Kupfer statt Silber) gebildet wird, was zu geänderten Materialeigenschaften führt und eine Anpassung im Hinblick auf die übrigen Lotbestandteile und modifizierte Fügebedingungen zur Folge hat. Die derart hergestellten Metall-Keramik-Substrate weisen daher neben einer Metallschicht und einem Keramikkörper eine zwischen der Metallschicht und dem Keramikkörper liegende Verbindungsschicht auf, die ein Aktivmetall enthält.

Aufgrund der stetig steigenden Anforderungen im Bereich der Leistungselektronik wachsen auch die Anforderungen an die Stabilität der Verbindung zwischen der Metallschicht und dem Keramikkörper im Metall-Keramik-Substrat sowie an die Wärme- und Stromleitfähigkeit des Metall-Keramik-Substrats. Es hat sich gezeigt, dass sich die Stabilität der Verbindung zwischen der Metallschicht und dem Keramikkörper mit steigendem Gehalt an niedrigschmelzenden Metallen in der Verbindungsschicht erhöht. Allerdings ergibt sich bei einem steigenden Gehalt an niedrigschmelzendem Metall in der Verbindungsschicht das Problem, dass es zu einer erhöhten Diffusion des niedrigschmelzenden Metalls in die Metallschicht des Metall-Keramik-Substrats kommt. Dieser Effekt führt dazu, dass die Wärme- und Stromleitfähigkeit des Metall-Keramik-Substrats abnimmt.

Es besteht daher Bedarf an einem Metall-Keramik-Substrat, das einerseits eine Verbindung zwischen der Metallschicht und dem Keramikkörper mit hoher Stabilität und andererseits eine hohe Wärme- und Stromleitfähigkeit aufweist. Es besteht ferner Bedarf an einem solchen Metall-Keramik-Substrat, das zumindest weitgehend silberfrei ist, um die im Zusammenhang mit einer Silbermigration auftretenden Probleme zu vermeiden.

Die Aufgabe der vorliegenden Erfindung besteht daher darin, ein Metall-Keramik-Substrat bereitzustellen, das einerseits eine Verbindung zwischen der Metallschicht und dem Keramikkörper mit hoher Stabilität und andererseits eine hohe Wärme- und Stromleitfähigkeit aufweist. Eine weitere Aufgabe der vorliegenden Erfindung besteht daher darin, ein solches Metall-Keramik-Substrat bereitzustellen, das die im Zusammenhang mit einer Silbermigration auftretenden Probleme nicht aufweist.

Diese Aufgaben werden gelöst durch das Metall-Keramik-Substrat von Anspruch 1. Die Erfindung stellt daher bereit:

Ein Metall-Keramik-Substrat umfassend

(a) einen Keramikkörper,

(b) eine Metallschicht und

(c) eine Verbindungsschicht, die sich zwischen dem Keramikkörper und der Metallschicht befindet, wobei die Verbindungsschicht

(i) ein Metall M1 mit einem Schmelzpunkt von wenigstens 700°C,

(ii) ein Metall M2 mit einem Schmelzpunkt von weniger als 700°C,

(iii) ein Metall M3, das aus der Gruppe der Aktivmetalle ausgewählt ist, und

(iv) ein Metall M4, das aus der Gruppe ausgewählt ist, die aus Bismut, Gallium, Zink, Indium, Germanium, Aluminium und Magnesium besteht, aufweist,

dadurch gekennzeichnet, dass die Verbindungsschicht folgende Merkmale aufweist:

(c1)

$$M(M2)_{EDX} = 10 - 20 \text{ Gewichtsprozent,}$$

(c2)

$$15 \text{ Gewichtsprozent} \leq [M(M4)/M(M2)]_{ICP} * 1000 \text{ Gewichtsprozent} + M(M2)_{EDX} \leq 100 \text{ Gewichtsprozent und}$$

(c3)

$$M(Ag)_{EDX} < 10 \text{ Gewichtsprozent,}$$

wobei:

| | |
|---|---|
| $M(M2)_{EDX}$: | für den mittels EDX bestimmten Gehalt an Metall M2 in der Verbindungsschicht steht; |
| $[M(M4)/M(M2)]_{ICP}$: | für das mittels ICP bestimmte Verhältnis vom Gehalt an Metall M4 in der Verbindungsschicht zum Gehalt an Metall M2 in der Verbindungsschicht steht; und |
| $M(Ag)_{EDX}$ | für den mittels EDX bestimmten Gehalt an Silber in der Verbindungsschicht steht. |

Ferner stellt die Erfindung ein Verfahren zur Herstellung eines Metall-Keramik-Substrats und ein Modul aufweisend ein Metall-Keramik-Substrat bereit.

Das erfindungsgemäße Metall-Keramik-Substrat umfasst einen Keramikkörper, eine Metallschicht und eine Verbindungsschicht.

In dem Metall-Keramik-Substrat befindet sich die Verbindungsschicht zwischen dem Keramikkörper und der Metallschicht. Die Verbindungsschicht steht daher vorzugsweise mit dem Keramikkörper und der Metallschicht in Kontakt. Gemäß einer bevorzugten Ausführungsform enthält das Metall-Keramik-Substrat einen Keramikkörper, eine (erste) Metallschicht, eine (erste) Verbindungsschicht, die mit dem Keramikkörper und der ersten Metallschicht in Kontakt steht, eine zweite Metallschicht und eine zweite Verbindungsschicht, die mit dem Keramikkörper und der zweiten Metallschicht in Kontakt steht. Gemäß dieser Ausführungsform befindet sich vorzugsweise zwischen dem Keramikkörper und der (ersten) Metallschicht eine (erste) Verbindungsschicht und zwischen dem Keramikkörper und der zweiten Metallschicht eine zweite Verbindungsschicht. Ferner entspricht gemäß dieser Ausführungsform die Zusammensetzung der ersten Verbindungsschicht vorzugsweise der Zusammensetzung der zweiten Verbindungsschicht.

Der Keramikkörper weist vorzugsweise eine erste Oberfläche und eine zweite Oberfläche auf. Die Metallschicht weist vorzugsweise eine erste Oberfläche auf. Die zweite Metallschicht weist - soweit vorhanden - vorzugsweise eine erste Oberfläche auf. Gemäß einer bevorzugten Ausführungsform befindet sich im Metall-Keramik-Substrat die (erste) Verbindungsschicht zwischen der ersten Oberfläche des Keramikkörpers und der ersten Oberfläche der (ersten) Metallschicht. Gemäß einer weiteren bevorzugten Ausführungsform enthält das Metall-Keramik-Substrat eine zweite Verbindungsschicht, die mit der zweiten Oberfläche des Keramikkörpers und der ersten Oberfläche der zweiten Metallschicht in Kontakt steht. Gemäß dieser Ausführungsform befindet sich vorzugsweise im Metall-Keramik-Substrat die (erste) Verbindungsschicht zwischen der ersten Oberfläche des Keramikkörpers und der ersten Oberfläche der (ersten) Metallschicht und die zweite Verbindungsschicht zwischen der zweiten Oberfläche des Keramikkörpers und der ersten Oberfläche der zweiten Metallschicht. Gemäß einer weiteren bevorzugten Ausführungsform befindet sich zwischen dem Keramikkörper und der (ersten) Metallschicht neben der erfindungsgemäßen Verbindungsschicht keine weitere Schicht. Gemäß noch einer weiteren Ausführungsform befindet sich zwischen dem Keramikkörper und der - soweit vorhanden - zweiten Metallschicht neben der erfindungsgemäßen Verbindungsschicht keine weitere Schicht.

Die Keramik des Keramikkörpers ist vorzugsweise eine isolierende Keramik. Gemäß einer bevorzugten Ausführungsform ist die Keramik aus der Gruppe ausgewählt, die aus Oxidkeramiken, Nitridkeramiken und Carbidkeramiken besteht. Gemäß einer weiteren bevorzugten Ausführungsform ist die Keramik aus der Gruppe ausgewählt, die aus Metalloxidkeramiken, Siliziumoxidkeramiken, Metallnitridkeramiken, Siliziumnitridkeramiken, Bornitridkeramiken und Borcarbidkeramiken besteht. Gemäß einer besonders bevorzugten Ausführungsform ist die Keramik aus der Gruppe ausgewählt, die aus Aluminiumnitridkeramiken, Siluziumnitridkeramiken und Aluminiumoxidkeramiken (wie zum Beispiel ZTA ("Zirconia Toughened Alumina") -Keramiken) besteht. Gemäß einer weiteren ganz besonders bevorzugten Ausführungsform besteht der Keramikkörper aus (1) wenigstens einem Element, das aus der Gruppe ausgewählt ist, die aus Silizium und Aluminium besteht, (2) wenigstens einem Element, das aus der Gruppe ausgewählt ist, die aus Sauerstoff und Stickstoff besteht, optional (3) wenigstens einem Element, das aus der Gruppe ausgewählt ist, die aus (3a) Metallen der seltenen Erden, (3b) Metallen der zweiten Hauptgruppe des Periodensystems der Elemente, (3c) Zirkonium, (3d) Kupfer, (3e) Molybdän und (3f) Silizium besteht, und optional (4) unvermeidlichen Verunreinigungen. Gemäß noch einer weiteren ganz besonders bevorzugten Ausführungsform ist der Keramikkörper frei von Bismut, Gallium und Zink.

Der Keramikkörper weist vorzugsweise eine Dicke von 0,05 - 10 mm, mehr bevorzugt im Bereich von 0,1 - 5 mm und besonders bevorzugt im Bereich von 0,15 - 3 mm auf.

Das Metall der Metallschicht ist vorzugsweise aus der Gruppe ausgewählt, die aus Kupfer, Aluminium und Molybdän besteht. Gemäß einer besonders bevorzugten Ausführungsform ist das Metall der Metallschicht aus der Gruppe ausgewählt, die aus Kupfer und Molybdän besteht. Gemäß einer ganz besonders bevorzugten Ausführungsform ist das Metall der Metallschicht Kupfer. Gemäß einer weiteren ganz besonders bevorzugten Ausführungsform besteht die Metallschicht aus Kupfer und unvermeidlichen Verunreinigungen.

Die Metallschicht weist vorzugsweise eine Dicke im Bereich von 0,01 - 10 mm, besonders bevorzugt im Bereich von 0,03 - 5 mm und ganz besonders bevorzugt im Bereich von 0,05 - 3 mm auf.

Die Verbindungsschicht umfasst (i) ein Metall M1 mit einem Schmelzpunkt von wenigstens 700°C, (ii) ein Metall M2 mit einem Schmelzpunkt von weniger als 700°C, (iii) ein Metall M3, das aus der Gruppe der Aktivmetalle ausgewählt ist, und (iv) ein Metall M4, das aus der Gruppe ausgewählt ist, die aus Bismut, Gallium, Zink, Indium, Germanium, Aluminium und Magnesium besteht.

Unter Verbindungsschicht ist vorzugsweise der Bereich des Metall-Keramik-Substrats zu verstehen, der sich zwischen dem Keramikkörper und der Metallschicht befindet.

Die Verbindungsschicht umfasst (i) ein Metall M1 mit einem Schmelzpunkt von wenigstens 700°C. Das Metall M1 mit einem Schmelzpunkt von wenigstens 700°C weist vorzugsweise einen Schmelzpunkt von wenigstens 850°C und besonders bevorzugt einen Schmelzpunkt von wenigstens 1000°C auf. Gemäß einer bevorzugten Ausführungsform ist das Metall M1 mit einem Schmelzpunkt von wenigstens 700°C aus der Gruppe ausgewählt, die aus Kupfer, Nickel, Wolfram und Molybdän besteht. Gemäß einer besonders bevorzugten Ausführungsform ist das Metall M1 mit einem Schmelzpunkt von wenigstens 700°C Kupfer.

Die Verbindungsschicht umfasst (ii) ein Metall M2 mit einem Schmelzpunkt von weniger als 700°C. Das Metall M2 mit einem Schmelzpunkt von weniger als 700°C weist vorzugsweise einen Schmelzpunkt von weniger als 600°C und besonders bevorzugt einen Schmelzpunkt von weniger als 550°C auf. Gemäß einer besonders bevorzugten Ausführungsform ist das Metall M2 mit einem Schmelzpunkt von weniger als 700°C Zinn.

Die Verbindungsschicht umfasst (iii) ein Metall M3, das aus der Gruppe der Aktivmetalle ausgewählt ist. Das Metall M3 ist daher vorzugsweise ein Metall, das durch chemische Reaktion eine Verbindung zur Keramik herstellt. Gemäß einer bevorzugten Ausführungsform ist das Metall M3 aus der Gruppe ausgewählt, die aus Hafnium, Titan, Zirkonium, Niob, Cer, Tantal und Vanadium besteht. Gemäß einer mehr bevorzugten Ausführungsform ist das Metall M3 aus der Gruppe ausgewählt, die aus Hafnium, Titan, Zirkonium, Niob und Cer besteht. Gemäß einer besonders bevorzugten Ausführungsform ist das Metall M3 aus der Gruppe ausgewählt, die aus Hafnium, Titan und Zirkonium besteht. Gemäß einer ganz besonders bevorzugten Ausführungsform ist das Metall M3 Titan.

Die Verbindungsschicht umfasst (iv) ein Metall M4. Das Metall M4 ist ein Metall, das aus der Gruppe ausgewählt ist, die aus Bismut, Gallium, Zink, Indium, Germanium, Aluminium und Magnesium besteht. Gemäß einer besonders bevorzugten Ausführungsform ist das Metall M4 aus der Gruppe ausgewählt, die aus Bismut, Gallium und Zink besteht. Gemäß einer ganz besonders bevorzugten Ausführungsform ist das Metall M4 Bismut.

Bei den Metallen M1, M2, M3 und M4 handelt es sich um verschiedene Metalle. Die Verbindungsschicht, die sich zwischen dem Keramikkörper und der Metallschicht befindet, weist daher jedes der Metalle M1, M2, M3 und M4 auf. Demnach weist die Verbindungsschicht, die sich zwischen dem Keramikkörper und der Metallschicht befindet, (i) ein Metall M1 mit einem Schmelzpunkt von wenigstens 700°C, (ii) ein Metall M2 mit einem Schmelzpunkt von weniger als 700°C, (iii) ein Metall M3, das aus der Gruppe der Aktivmetalle ausgewählt ist, und (iv) ein Metall M4, das aus der Gruppe ausgewählt ist, die aus Bismut, Gallium, Zink, Indium, Germanium, Aluminium und Magnesium besteht, auf, wobei die Metalle M1, M2, M3 und M4 verschieden sind. Daher ist das Metall M2 mit einem Schmelzpunkt von weniger als 700°C nicht aus der Gruppe ausgewählt, die aus Bismut, Gallium, Zink, Indium, Aluminium und Magnesium besteht. Ferner ist das Metall M2 kein Aktivmetall. Ebenso ist das Metall M1 mit einem Schmelzpunkt von wenigstens 700°C nicht Germanium. Darüber hinaus ist das Metall M1 mit einem Schmelzpunkt von wenigstens 700°C kein Aktivmetall.

Erfindungsgemäß weist die Verbindungsschicht folgende Merkmale auf:

(c1)

$$M(M2)_{EDX} = 10 - 20 \text{ Gewichtsprozent,}$$

(c2)

$$15 \text{ Gewichtsprozent} \leq [M(M4)/M(M2)]_{ICP} * 1000 \text{ Gewichtsprozent} + M(M2)_{EDX} \leq 100 \text{ Gewichtsprozent und}$$

(c3)

$$M(Ag)_{EDX} < 10 \text{ Gewichtsprozent,}$$

wobei:

$M(M2)_{EDX}$: für den mittels EDX bestimmten Gehalt [in Gewichtsprozent] an Metall M2 in der Verbindungsschicht steht;

$[M(Bi)/M(M2)]_{ICP}$: für das mittels ICP bestimmte Verhältnis vom Gehalt an Metall M4 in der Verbindungsschicht zum Gehalt an Metall M2 in der Verbindungsschicht steht; und

$M(Ag)_{EDX}$ für den mittels EDX bestimmten Gehalt [in Gewichtsprozent] an Silber in der Verbindungsschicht steht.

Gemäß Merkmal (c1) beträgt der mittels EDX bestimmte Gehalt an Metall M2 in der Verbindungsschicht 10 - 20 Gewichtsprozent. Gemäß einer bevorzugten Ausführungsform weist die Verbindungsschicht folgendes Merkmal auf:

(c1')

$$M(M2)_{EDX} = 10 - 18 \text{ Gewichtsprozent.}$$

Gemäß einer besonders bevorzugten Ausführungsform weist die Verbindungsschicht folgendes Merkmal auf:

(c1")

$$M(M2)_{EDX} = 10 - 15 \text{ Gewichtsprozent.}$$

Gemäß Merkmal (c2) besteht eine Beziehung zwischen dem Gehalt an Metall M4 und dem Gehalt an Metall M2, so dass die Verbindungsschicht das folgende Merkmal aufweist:

(c2)

$$15 \text{ Gewichtsprozent} \leq [M(M4)/M(M2)]_{ICP} * 1000 \text{ Gewichtsprozent} + M(M2)_{EDX} \leq$$

$$100 \text{ Gewichtsprozent.}$$

Gemäß einer bevorzugten Ausführungsform weist die Verbindungsschicht folgendes Merkmal auf:

(c2'):

$$15 \text{ Gewichtsprozent} \leq [M(M4)/M(M2)]_{ICP} * 1000 \text{ Gewichtsprozent} + M(M2)_{EDX} \leq$$

$$80 \text{ Gewichtsprozent.}$$

Gemäß einer besonders bevorzugten Ausführungsform weist die Verbindungsschicht folgendes Merkmal auf:

(c2"):

$$15 \text{ Gewichtsprozent} \leq [M(M4)/M(M2)]_{ICP} * 1000 \text{ Gewichtsprozent} + M(M2)_{EDX} \leq$$

$$70 \text{ Gewichtsprozent.}$$

Überraschenderweise hat sich herausgestellt, dass bereits durch die Zugabe von geringen Mengen an Metall M4 die für eine besonders stabile Verbindung zwischen dem Keramikkörper und der Metallschicht erforderliche Menge an dem Metall M2 mit einem Schmelzpunkt von weniger als 700°C gesenkt werden kann, so dass die Strom- und Wärmeleitfähigkeit des Metall-Keramik-Substrats nicht durch eine Diffusion des Metalls M2 in die Metallschicht beeinträchtigt wird. Weiterhin überraschend hat sich herausgestellt, dass eine besonders stabile Verbindung dann erreicht wird, wenn der Gehalt an Metall M2 in der Verbindungsschicht in einem definierten Bereich liegt. Die für diesen Effekt erforderliche Beziehung zwischen den Anteilen an den Metallen M2 und M4 in der Verbindungsschicht wird durch die Merkmale (c1) und (c2) ausgedrückt.

Daher wird überraschenderweise durch die Einstellung des Gehalts an Metall M2 mit einem Schmelzpunkt von weniger als 700°C und des Gehalts an Metall M4, das aus der Gruppe ausgewählt ist, die aus Bismut, Gallium, Zink, Indium, Germanium, Aluminium und Magnesium besteht, ein Metall-Keramik-Substrat bereitgestellt, dass einerseits eine besonders stabile Verbindung zwischen dem Keramikkörper und der Metallschicht und andererseits eine hohe Strom- und Wärmeleitfähigkeit aufweist.

Gemäß Merkmal (c3) beträgt der mittels EDX bestimmte Gehalt an Silber in der Verbindungsschicht nicht mehr als 10 Gewichtsprozent. Demnach umfasst die Erfindung auch Ausführungsformen, bei denen die Verbindungsschicht silberfrei ist, also der mittels EDX bestimmte Gehalt an Silber in der Verbindungsschicht 0 Gewichtsprozent beträgt.

Gemäß einer besonders bevorzugten Ausführungsform weist die Verbindungsschicht folgendes Merkmal auf:

(c3')

$$M(Ag)_{EDX} < 5 \text{ Gewichtsprozent.}$$

Gemäß einer ganz besonders bevorzugten Ausführungsform weist die Verbindungsschicht folgendes Merkmal auf:

(c3")

$$M(Ag)_{EDX} < 1 \text{ Gewichtsprozent.}$$

Durch die Abwesenheit von Silber oder die Gegenwart von nur geringen Silbermengen kann eine unerwünschte Migration von Silber an den Rändern der Verbindungsschicht im Metall-Keramik-Substrat vermieden oder reduziert werden.

Gemäß einer bevorzugten Ausführungsform liegt der mittels EDX bestimmte Gehalt an Metall M1 in der Verbindungsschicht (M(M1)$_{EDX}$) im Bereich von 65 - 89 Gewichtsprozent. Gemäß einer besonders bevorzugten Ausführungsform liegt der mittels EDX bestimmte Gehalt an Metall M1 in der Verbindungsschicht (M(M1)$_{EDX}$) im Bereich von 67 - 88 Gewichtsprozent. Gemäß einer ganz besonders bevorzugten Ausführungsform liegt der mittels EDX bestimmte Gehalt an Metall M1 in der Verbindungsschicht (M(M1)$_{EDX}$) im Bereich von 70 - 88 Gewichtsprozent.

Gemäß einer bevorzugten Ausführungsform liegt der mittels EDX bestimmte Gehalt an Metall M3 in der Verbindungsschicht (M(M3)$_{EDX}$) im Bereich von 0,5 - 15 Gewichtsprozent. Gemäß einer besonders bevorzugten Ausführungsform liegt der mittels EDX bestimmte Gehalt an Metall M3 in der Verbindungsschicht (M(M3)$_{EDX}$) im Bereich von 0,5 - 14 Gewichtsprozent. Gemäß einer ganz besonders bevorzugten Ausführungsform liegt der mittels EDX bestimmte Gehalt an Metall M3 in der Verbindungsschicht (M(M3)$_{EDX}$) im Bereich von 1 - 14 Gewichtsprozent.

Gemäß einer bevorzugten Ausführungsform liegt der mittels ICP bestimmte Gehalt an Metall M4 in der Verbindungsschicht (M(M4)$_{ICP}$) im Bereich von 0,01 - 2 Gewichtsprozent. Gemäß einer besonders bevorzugten Ausführungsform liegt der mittels ICP bestimmte Gehalt an Metall M4 in der Verbindungsschicht (M(M4)$_{ICP}$) im Bereich von 0,01 - 1,5 Gewichtsprozent. Gemäß einer ganz besonders bevorzugten Ausführungsform liegt der mittels ICP bestimmte Gehalt an Metall M4 in der Verbindungsschicht (M(M4)$_{ICP}$) im Bereich von 0,1 - 1 Gewichtsprozent.

Das erfindungsgemäße Metall-Keramik-Substrat kann auf eine fachübliche Weise hergestellt werden.

Gemäß einer bevorzugten Ausführungsform umfasst ein Verfahren zur Herstellung eines erfindungsgemäßen Metall-Keramik-Substrats die Schritte:

a) Bereitstellen eines Stapels enthaltend

a1) einen Keramikkörper,
a2) eine Metallfolie und
a3) ein Lötmaterial, das mit dem Keramikkörper und der Metallfolie in Kontakt steht, wobei das Lötmaterial umfasst:

(i) ein Metall M1 mit einem Schmelzpunkt von wenigstens 700°C,
(ii) ein Metall M2 mit einem Schmelzpunkt von weniger als 700°C,
(iii) ein Metall M3, das aus der Gruppe der Aktivmetalle ausgewählt ist, und
(iv) ein Metall M4, das aus der Gruppe ausgewählt ist, die aus Bismut, Gallium, Zink, Indium, Germanium, Aluminium und Magnesium besteht, und

b) Erhitzen des Stapels unter Erhalt eines Metall-Keramik-Substrats.

Daher wird vorzugsweise zunächst ein Stapel bereitgestellt, der einen Keramikkörper, eine Metallfolie und ein Lötmaterial, das mit dem Keramikkörper und der Metallfolie in Kontakt steht, enthält.

In dem Stapel befindet sich das Lötmaterial daher vorzugsweise zwischen dem Keramikkörper und der Metallfolie. Gemäß einer bevorzugten Ausführungsform enthält der Stapel einen Keramikkörper, eine (erste) Metallfolie, ein (erstes) Lötmaterial, das mit dem Keramikkörper und der ersten Metallfolie in Kontakt steht, eine zweite Metallfolie und ein zweites Lötmaterial, das mit dem Keramikkörper und der zweiten Metallfolie in Kontakt steht. Gemäß dieser Ausführungsform befindet sich vorzugsweise zwischen dem Keramikkörper und der (ersten) Metallfolie ein (erstes) Lötmaterial und zwischen dem Keramikkörper und der zweiten Metallfolie ein zweites Lötmaterial. Ferner entspricht gemäß dieser Ausführungsform das erste Lötmaterial vorzugsweise dem zweiten Lötmaterial.

Der Keramikkörper, die Metallfolie und das Lötmaterial sind vorzugsweise so ausgestaltet, dass nach dem Erhitzen das erfindungsgemäße Metall-Keramik-Substrat entsteht.

Daher sind der Keramikkörper und die Metallfolie vorzugsweise so ausgestaltet, wie dies vorstehend in Bezug auf den Keramikkörper und die Metallschicht des Metall-Keramik-Substrats beschrieben ist.

Das Lötmaterial umfasst vorzugsweise (i) ein Metall M1 mit einem Schmelzpunkt von wenigstens 700°C, (ii) ein Metall M2 mit einem Schmelzpunkt von weniger als 700°C, (iii) ein Metall M3, das aus der Gruppe der Aktivmetalle ausgewählt ist, und (iv) ein Metall M4, das aus der Gruppe ausgewählt ist, die aus Bismut, Gallium, Zink, Indium, Germanium, Aluminium und Magnesium besteht. Das Metall M1, das Metall M2, das Metall M3 und das Metall M4 sind vorzugsweise so ausgestaltet, wie dies vorstehend in Bezug auf die Verbindungsschicht des Metall-Keramik-Substrats beschrieben ist.

Bei den Metallen M1, M2, M3 und M4 handelt es sich demnach um verschiedene Metalle. Das Lötmaterial, das mit dem Keramikkörper und der Metallfolie in Kontakt steht, weist daher jedes der Metalle M1, M2, M3 und M4 auf. Demnach weist das Lötmaterial, das mit dem Keramikkörper und der Metallfolie in Kontakt steht, (i) ein Metall M1 mit einem Schmelzpunkt von wenigstens 700°C, (ii) ein Metall M2 mit einem Schmelzpunkt von weniger als 700°C, (iii) ein Metall M3, das aus der Gruppe der Aktivmetalle ausgewählt ist, und (iv) ein Metall M4, das aus der Gruppe ausgewählt ist, die aus Bismut, Gallium, Zink, Indium, Germanium, Aluminium und Magnesium besteht, auf, wobei die Metalle M1, M2, M3 und M4 verschieden sind. Daher ist das Metall M2 mit einem Schmelzpunkt von weniger als 700°C nicht aus der Gruppe ausgewählt, die aus Bismut, Gallium, Zink, Indium, Aluminium und Magnesium besteht. Ferner ist das Metall M2 kein Aktivmetall. Ebenso ist das Metall M1 mit einem Schmelzpunkt von wenigstens 700°C nicht Germanium. Darüber hinaus ist das Metall M1 mit einem Schmelzpunkt von wenigstens 700°C kein Aktivmetall.

Gemäß einer bevorzugten Ausführungsform liegen (i) das Metall M1, (ii) das Metall M2, (iii) das Metall M3 und (iv) das Metall M4 als Bestandteil wenigstens einer Metallkomponente vor. Daher umfasst das Lötmaterial vorzugsweise wenigstens eine Metallkomponente, die (i) das Metall M1, (ii) das Metall M2, (iii) das Metall M3 und (iv) das Metall M4 aufweist. So kann es beispielsweise bevorzugt sein, dass das Lötmaterial umfasst: eine Metallkomponente (i), die das Metall M1 enthält, eine Metallkomponente (ii), die das Metall M2 enthält, eine Metallkomponente (iii), die das Metall M3 enthält, und eine Metallkomponente (iv), die das Metall M4 enthält. Ferner kann es auch bevorzugt sein, dass das Lötmaterial umfasst: eine Metallkomponente (i), die ein Mitglied aus der Gruppe enthält, die aus (i) einem Metall M1, (ii) einem Metall M2, (iii) einem Metall M3 und (iv) einem Metall M4 besteht, und wenigstens eine weitere Metallkomponente (ii), die Mitglieder aus der Gruppe, die aus (i) einem Metall M1, (ii) einem Metall M2, (iii) einem Metall M3 und (iv) einem Metall M4 besteht, enthält, die nicht in Metallkomponente (i) enthalten sind. Der Begriff der Metallkomponente ist nicht weiter eingeschränkt. Er umfasst neben Metallen und Metalllegierungen auch Metallverbindungen wie intermetallische Phasen und andere Verbindungen (wie beispielsweise Metallhydride). Gemäß einer bevorzugten Ausführungsform ist die Metallkomponente daher aus der Gruppe ausgewählt, die aus Metallen, Metalllegierungen und Metallverbindungen besteht.

Das Lötmaterial umfasst vorzugsweise (i) ein Metall M1 mit einem Schmelzpunkt von wenigstens 700°C. Gemäß einer bevorzugten Ausführungsform umfasst das Lötmaterial eine Metallkomponente (i), die ein Metall M1 mit einem Schmelzpunkt von wenigstens 700°C enthält. Gemäß einer besonders bevorzugten Ausführungsform umfasst das Lötmaterial eine Metallkomponente (i), die Kupfer enthält. Gemäß einer weiteren bevorzugten Ausführungsform handelt es sich bei Metallkomponente (i) um Kupfer.

Das Lötmaterial umfasst vorzugsweise (ii) ein Metall M2 mit einem Schmelzpunkt von weniger als 700°C. Gemäß einer bevorzugten Ausführungsform umfasst das Lötmaterial eine Metallkomponente (ii), die ein Metall M2 mit einem Schmelzpunkt von weniger als 700°C enthält. Gemäß einer besonders bevorzugten Ausführungsform ist die Metallkomponente (ii) eine Legierung eines Metalls M2 mit einem Schmelzpunkt von weniger als 700°C mit einem weiteren Metall. Das weitere Metall kann zum Beispiel aus der Gruppe ausgewählt sein, die aus Metallen M1 mit einem Schmelzpunkt von weniger als 700°C, Metallen M2 mit einem Schmelzpunkt von wenigstens 700°C, Metallen M3, die aus der Gruppe der Aktivmetalle ausgewählt sind, und Metallen M4 ausgewählt aus der Gruppe bestehend aus Bismut, Indium, Germanium, Gallium und Zink besteht. Gemäß einer weiteren bevorzugten Ausführungsform ist die Metallkomponente (ii) enthaltend ein Metall M2 mit einem Schmelzpunkt von weniger als 700°C aus der Gruppe ausgewählt, die aus Zinn, Zinn-Kupfer-Legierungen, Zinn-Bismut-Legierungen, Zinn-Antimon-Legierungen, Zinn-Zink-Bismut-Legierungen und Indium-Zinn-Legierungen besteht.

Das Lötmaterial umfasst vorzugsweise ein Metall M3, das aus der Gruppe der Aktivmetalle ausgewählt ist. Gemäß einer bevorzugten Ausführungsform umfasst das Lötmaterial eine Metallkomponente (iii), die ein Metall M3, das aus der Gruppe der Aktivmetalle ausgewählt ist, enthält. Gemäß einer besonders bevorzugten Ausführungsform ist die Metallkomponente (iii) eine Aktivmetalllegierung oder eine Aktivmetallverbindung, besonders bevorzugt ein Aktivmetallhydrid. Die Metallkomponente (iii) ist vorzugsweise aus der Gruppe ausgewählt, die aus Titanhydrid, Titan-Zirkonium-Kupfer-Legierungen, Zirkoniumhydrid und Hafniumhydrid besteht. Gemäß einer besonders bevorzugten Ausführungsform ist die Metallkomponente (iii) aus der Gruppe ausgewählt, die aus Hafniumhydrid, Titanhydrid und Zirkoniumhydrid besteht. Gemäß einer ganz besonders bevorzugten Ausführungsform ist die Metallkomponente (iii) Titanhydrid.

Das Lötmaterial umfasst vorzugsweise ein Metall M4. Gemäß einer bevorzugten Ausführungsform umfasst das Lötmaterial eine Metallkomponente (iv), die ein Metall M4, das aus der Gruppe ausgewählt ist, die aus Bismut, Gallium, Zink, Indium, Germanium, Aluminium und Magnesium besteht, enthält. Gemäß einer besonders bevorzugten Ausführungsform umfasst das Lötmaterial eine Metallkomponente (iv), die Bismut enthält. Gemäß einer weiteren bevorzugten Ausführungsform handelt es sich bei Metallkomponente (iv) um Bismut.

Gemäß einer bevorzugten Ausführungsform beträgt der Anteil des Metalls M1 mit einem Schmelzpunkt von wenigstens 700°C 65 - 89 Gewichtsprozent, besonders bevorzugt 67 - 88 Gewichtsprozent und ganz besonders bevorzugt 70 - 88 Gewichtsprozent, bezogen auf das Gesamtmetallgewicht des Lötmaterials. Gemäß einer weiteren bevorzugten Ausführungsform beträgt der Anteil des Metalls M2 mit einem Schmelzpunkt von weniger als 700°C 10 - 20 Gewichtsprozent, besonders bevorzugt 10 - 18 Gewichtsprozent und ganz besonders bevorzugt 10 - 15 Gewichtsprozent, bezogen auf das Gesamtmetallgewicht des Lötmaterials. Gemäß noch einer weiteren bevorzugten Ausführungsform beträgt der Anteil des Metalls M3, das aus der Gruppe der Aktivmetalle ausgewählt ist, 0,5 - 15 Gewichtsprozent, besonders bevorzugt 0,5 - 14 Gewichtsprozent und ganz besonders bevorzugt 1 - 14 Gewichtsprozent, bezogen auf das Gesamtmetallgewicht des Lötmaterials. Gemäß einer weiteren bevorzugten Ausführungsform beträgt der Anteil des Metalls M4, das aus der Gruppe ausgewählt ist, die aus Bismut, Gallium, Zink, Indium, Germanium, Aluminium und Magnesium besteht, 0,01 - 2 Gewichtsprozent, besonders bevorzugt 0,01 - 1,5 Gewichtsprozent und ganz besonders bevorzugt 0,1 - 1 Gewichtsprozent, bezogen auf das Gesamtmetallgewicht des Lötmaterials. Das Lötmaterial ist vorzugsweise silberfrei oder silberarm. Daher beträgt der Anteil von Silber vorzugsweise weniger als 10 Gewichtsprozent, besonders bevorzugt weniger als 5 Gewichtsprozent und ganz besonders bevorzugt weniger als 1 Gewichtsprozent, bezogen auf das Gesamtmetallgewicht des Lötmaterials.

Das Lötmaterial steht mit dem Keramikkörper und der Metallfolie in Kontakt. Dementsprechend befindet sich das Lötmaterial vorzugsweise zwischen dem Keramikkörper und der Metallfolie. Zum Beispiel kann das Lötmaterial auf dem Keramikkörper bereitgestellt und anschließend die Metallfolie auf das Lötmaterial aufgebracht werden. Das Lötmaterial ist vorzugsweise wenigstens ein Material, das aus der Gruppe ausgewählt ist, die aus Pasten, Folien und Abscheidungen besteht, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweisen.

Bei dem Lötmaterial kann es sich um eine Paste handeln. Die Paste enthält vorzugsweise (a) wenigstens eine Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist und (b) ein organisches Medium.

Das organische Medium ist vorzugsweise ein organisches Medium, das üblicherweise auf dem betreffenden technischen Gebiet verwendet wird. Vorzugsweise enthält das organische Medium ein organisches Bindemittel, ein organisches Dispersionsmittel oder eine Mischung davon.

Das organische Bindemittel wird vorzugsweise beim Erhitzen aus dem Lötmaterial entfernt. Vorzugsweise handelt es sich beim organischen Bindemittel um Thermoplasten oder Duroplasten. Beispiele für organische Bindemittel umfassen Zellulosederivate (wie Ethylzellulose, Butylzellulose und Zelluloseacetate), Polyether (wie Polyoxymethylen) und Acrylharze (wie Polymethylmethacrylate und Polybutylenmethacrylate).

Das organische Dispersionsmittel ist vorzugsweise eine organische Verbindung, die der Paste eine geeignete Viskosität verleiht und die beim Trocknen der Paste oder beim Erhitzen ausgetrieben wird. Das organische Dispersionsmittel kann zum Beispiel aus aliphatischen Alkoholen, Terpenalkoholen, alizyklischen Alkoholen, aromatischen zyklischen Carbonsäureestern, aliphtischen Estern, Karbitolen und aliphatischen Polyolen ausgewählt sein. Beispiele für das organische Dispersionsmittel umfassen Oktanol, Dekanol, Terpineole (zum Beispiel Dihydroterpineol), Cyclohexanol, Dibutylphthalat, Karbitol, Ethylkarbitol, Ethylenglykol, Butandiol und Glycerin.

Die Paste kann darüber hinaus fachübliche Zusatzstoffe enthalten. Beispiele für solche Zusatzstoffe umfassen anorganische Bindemittel (wie Glasfritten), Stabilisatoren, Tenside, Dispergiermittel, Rheologiemodifizierungsmittel, Benetzungshilfen, Entschäumer, Füllstoffe und Härter.

Gemäß einer bevorzugten Ausführungsform beträgt der Anteil an der wenigstens einen Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist, 20 - 95 Gewichtsprozent, mehr bevorzugt 30 - 95 Gewichtsprozent und besonders bevorzugt 75 - 95 Gewichtsprozent, bezogen auf das Gesamtgewicht der Paste. Gemäß einer weiteren bevorzugten Ausführungsform beträgt der Anteil an dem organischen Medium 5 - 80 Gewichtsprozent, mehr bevorzugt 5 - 70 Gewichtsprozent und besonders bevorzugt 5 - 25 Gewichtsprozent, bezogen auf das Gesamtgewicht der Paste.

Gemäß einer weiteren bevorzugten Ausführungsform ist das Verhältnis des Gesamtgewichts der (a) wenigstens einen Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist, zum Gewicht des (b) organischen Mediums wenigstens 5 : 1, besonders bevorzugt wenigstens 7 : 1 und ganz besonders bevorzugt wenigstens 8 : 1. Gemäß einer weiteren bevorzugten Ausführungsform liegt das Verhältnis des Gesamtgewichts der (a) wenigstens einen Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist, zum Gewicht des (b) organischen Mediums im Bereich von 1 : 1 bis 20 : 1, besonders bevorzugt im Bereich von 2 : 1 bis 20 : 1 und ganz besonders bevorzugt im Bereich von 5 : 1 bis 15 : 1.

Zur Bereitstellung des Stapels wird die Paste vorzugsweise auf die Oberfläche des Keramikkörpers aufgetragen. Die Paste kann zum Beispiel durch ein Dispergierverfahren oder ein Druckverfahren aufgetragen werden. Geeignete Druckverfahren sind zum Beispiel Siebdruckverfahren, Inkjetdruckverfahren und Offsetdruckverfahren. Vorzugsweise wird die Paste auf die Oberfläche des Keramikkörpers durch ein Siebdruckverfahren aufgetragen.

Nach dem Pastenauftrag kann die Paste bei Bedarf vorgetrocknet werden. Die Vortrocknung kann bei Raumtemperatur oder bei erhöhter Temperatur erfolgen. Die Bedingungen für die Vortrocknung können in Abhängigkeit von dem in der Paste enthaltenen organischen Medium variieren. Die Vortrocknungstemperatur kann zum Beispiel im Bereich von 50 - 180°C liegen und liegt vorzugsweise im Bereich von 80 - 150°C. Die Vortrocknung erfolgt üblicherweise für einen Zeitraum von 2 min - 2 h und vorzugsweise für einen Zeitraum von 5 min - 1 h.

Im Anschluss kann die Metallfolie mit ihrer Oberfläche auf die - bei Bedarf vorgetrocknete - Paste aufgebracht werden, um einen Stapel zu erhalten.

Bei dem Lötmaterial kann es sich auch um eine Folie handeln.

Die Folie umfasst ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht. Zusätzlich kann die Folie weitere Bestandteile umfassen, wie zum Beispiel ein geeignetes Bindemittel.

Die Folie kann zum Beispiel erhalten werden, indem wenigstens eine Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist, sowie gegebenenfalls weitere Bestandteile homogenisiert und auf eine Temperatur erhitzt werden, die unterhalb der Schmelztemperatur des Metalls M1 mit einem Schmelzpunkt von wenigstens 700°C, des Metalls M2 mit einem Schmelzpunkt von weniger als 700°C, des Aktivmetalls M3 und des Metalls M4, das aus der Gruppe ausgewählt ist, die aus Bismut, Gallium, Zink, Indium, Germanium, Aluminium und Magnesium besteht, liegt, die aber ausreichend ist, um eine Bindung zwischen den Metallen auszubilden. Diese Temperatur kann zum Beispiel wenigstens 200°C betragen.

Alternativ kann die Folie zum Beispiel erhalten werden, indem wenigstens eine Metallkomponente, die ein Metall M1 mit einem Schmelzpunkt von wenigstens 700°C, ein Metall M2 mit einem Schmelzpunkt von weniger als 700°C, ein Metall M3, das aus der Gruppe der Aktivmetalle ausgewählt ist, und ein Metall M4, das aus der Gruppe ausgewählt ist, die aus Bismut, Gallium, Zink, Indium, Germanium, Aluminium und Magnesium besteht, aufweist, sowie ein Bindemittel vermischt werden und die Mischung zu einem Grünkörper geformt und erhitzt wird. Beim Erhitzen kann das Bindemittel aushärten und eine Matrix formen, in der die Metalle verteilt sind.

Zur Bereitstellung des Stapels kann die Folie zum Beispiel auf die Keramik gelegt werden. Im Anschluss kann die Metallfolie mit ihrer Oberfläche auf die sich auf der Keramik befindliche Folie aufgebracht werden, um einen Stapel zu erhalten.

Gemäß einer weiteren Ausführungsform kann es sich bei dem Lötmaterial um eine Abscheidung handeln. Die Abscheidung des Lötmaterials kann zum Beispiel durch galvanische Abscheidung oder Gasphasenabscheidung erzeugt sein. Vorzugsweise wird die Abscheidung des Lötmaterials auf dem Keramikkörper erzeugt. Danach kann die Metallfolie auf das auf der Keramik abgeschiedene Lötmaterial aufgebracht werden, um einen Stapel zu erhalten.

Das Erhitzen des Stapels erfolgt unter Erhalt eines Metall-Keramik-Substrats. Gemäß einer bevorzugten Ausführungsform erfolgt das Erhitzen, um unter Ausbildung einer stoffschlüssigen Verbindung zwischen dem Keramikkörper und der Metallfolie über das Lötmaterial ein Metall-Keramik-Substrat zu erhalten. Die Ausbildung der stoffschlüssigen Verbindung erfolgt vorzugsweise, indem beim Erhitzen das Metall M3 eine Verbindung mit dem Keramikkörper eingeht und das Metall M1 mit einem Schmelzpunkt von wenigstens 700°C, das Metall M2 mit einem Schmelzpunkt von weniger als 700°C, das Metall M4, das aus der Gruppe ausgewählt ist, die aus Bismut, Gallium, Zink, Indium, Germanium, Aluminium und Magnesium besteht, und das Metall der Metallfolie sich zu einer Legierung verbinden. Beim anschließenden Erstarren bildet sich dann eine stoffschlüssige Verbindung zwischen dem Keramikkörper und der Metallfolie über das mit dem Keramikkörper verbundene Aktivmetall M3 und die entstandene Legierung aus.

Beim Erhitzen wird der Stapel auf eine Spitzentemperatur erhitzt. Die Spitzentemperatur ist nicht weiter eingeschränkt und ist vorzugsweise kleiner gleich dem Schmelzpunkt des Metalls M1 mit einem Schmelzpunkt von wenigstens 700°C und niedriger als der Schmelzpunkt des Metalls der Metallfolie. Gemäß einer bevorzugten Ausführungsform liegt die Spitzentemperatur wenigstens 10°C und besonders bevorzugt wenigstens 50°C unter dem Schmelzpunkt des Metalls der Metallfolie. Gemäß einer weiteren bevorzugten Ausführungsform beträgt die Spitzentemperatur wenigstens 700°C. Die Spitzentemperatur liegt bevorzugt im Bereich von 700 - 1100°C, besonders bevorzugt im Bereich von 750 - 1050°C und ganz besonders bevorzugt im Bereich von 800 - 1000°C. Hierin verwendet bezieht sich die Spitzentemperatur auf die am Stapel mittels eines Thermoelements gemessene Temperatur. Die Spitzentemperatur ist dabei die maximale am Stapel gemessene Temperatur. Um nachteilige Effekte wie eine übermäßige Kontraktion oder ein Herausquellen des geschmolzenen Metalls aufgrund einer zu hohen Fluidität des geschmolzenen Metalls zu verhindern, wird der Fachmann bestrebt sein, übermäßig hohe Spitzentemperaturen zu vermeiden.

Beim Erhitzen erfährt der Stapel eine Temperaturzufuhr für eine Hochtemperaturheizdauer. Die Hochtemperaturheizdauer bezieht sich hierin vorzugsweise auf die Zeitdauer, bei der der Stapel beim Erhitzen einer Temperatur ausgesetzt ist, die wenigstens der Spitzentemperatur - 250°C entspricht. Bei einer beispielhaften Spitzentemperatur von 900°C entspricht die Hochtemperaturheizdauer daher der Zeitdauer, bei der der Stapel beim Erhitzen wenigstens einer Temperatur von 650°C ausgesetzt ist. Gemäß einer bevorzugten Ausführungsform beträgt die Hochtemperaturheizdauer nicht mehr als 60 min, mehr bevorzugt nicht mehr als 50 min, besonders bevorzugt nicht mehr als 45 min und ganz besonders bevorzugt nicht mehr als 40 min. Die Hochtemperaturheizdauer liegt vorzugsweise im Bereich von 2 - 60 min, mehr bevorzugt im Bereich von 3 - 50 min, besonders bevorzugt im Bereich von 5 - 45 min und ganz besonders bevorzugt im Bereich von 10 - 40 min.

Der Stapel wird vorzugsweise erhitzt, indem ausgehend von einer Heizzone der für das Erhitzen erforderliche Energieeintrag in Richtung des Stapels erfolgt. Die Ausbildung der stoffschlüssigen Verbindung erfolgt vorzugsweise, indem das Metall M3 eine Verbindung mit dem Keramikkörper eingeht und das Metall M1 mit einem Schmelzpunkt von wenigstens 700°C, das Metall M2 mit einem Schmelzpunkt von weniger als 700°C, das Metall M4, das aus der Gruppe ausgewählt ist, die aus Bismut, Gallium, Zink, Indium, Germanium, Aluminium und Magnesium besteht, und das Metall der Metallfolie sich zu einer Legierung verbinden. Beim anschließenden Erstarren bildet sich dann eine stoffschlüssige Verbindung zwischen dem Keramikkörper und der Metallfolie über das mit dem Keramikkörper verbundene Aktivmetall M3 und die Legierung aus.

Gemäß einer besonders bevorzugten Ausführungsform erfolgt das Erhitzen des Stapels in einem Ofen, vorzugsweise in einem Durchlaufofen oder in einem Kammerofen.

In der Heizzone liegt vorzugsweise eine nichtoxidierende Atmosphäre vor. Die nichtoxidierende Atmosphäre ist vorzugsweise eine Inertgasatmosphäre. Vorzugsweise liegt in der Heizzone eine Stickstoffatmosphäre, eine Heliumatmosphäre oder eine Argonatmosphäre vor. Gemäß einer besonders bevorzugten Ausführungsform liegt in der Heizzone eine Stickstoffatmosphäre vor. Vorzugsweise liegt der Anteil an einem reaktiven Gas, insbesondere Sauerstoff, in der nichtoxidierenden Atmosphäre bei weniger als 1000 ppm, mehr bevorzugt bei weniger als 500 ppm und besonders bevorzugt bei weniger als 40 ppm.

Beim Erhitzen des Stapels erfolgt vorzugsweise die Ausbildung einer stoffschlüssigen Verbindung zwischen dem Keramikkörper und der Metallfolie über das Lötmaterial unter Erhalt eines Metall-Keramik-Substrats, das einen Keramikkörper, eine Metallschicht und eine Verbindungsschicht, die sich zwischen dem Keramikkörper und der Metallschicht befindet, aufweist. Das Metall-Keramik-Substrat kann bei Bedarf weiteren Behandlungsschritten unterzogen werden. Beispielsweise kann das Metall-Keramik-Substrat, vorzugsweise die freiliegende Oberfläche der Metallschicht des Metall-Keramik-Substrats, poliert werden. Vorzugsweise wird die Oberfläche der Metallschicht des Metall-Keramik-Substrats physisch oder chemisch poliert. Ferner kann das Metall-Keramik-Substrat strukturiert werden. Zum Beispiel kann das Metall-Keramik-Substrat mit Leiterbahnen versehen werden. Die Leiterbahnen werden vorzugsweise durch Ätzen erzeugt.

Das erfindungsgemäße Metall-Keramik-Substrat kann insbesondere für Anwendungen in der Elektronik, vor allem für den Bereich der Leistungselektronik, eingesetzt werden.

Die Erfindung stellt daher auch ein Modul bereit, das ein vorstehend beschriebenes Metall-Keramik-Substrat aufweist.

Gemäß einer bevorzugten Ausführungsform umfasst ein solches Modul eine Bodenplatte. Diese Bodenplatte ist vorzugsweise mit der Metallschicht des Metall-Keramik-Substrats flächig verbunden. Gemäß einer weiteren bevorzugten Ausführungsform umfasst das Modul wenigstens einen Chip. Der wenigstens eine Chip ist vorzugsweise flächig mit der Metallschicht des wenigstens einen Metall-Keramik-Substrats verbunden. Gemäß einer weiteren bevorzugten Ausführungsform umfasst das Modul ein Metall-Keramik-Substrat, das eine erste Metallschicht und eine zweite Metallschicht aufweist (wobei die erste Metallschicht der zweiten Metallschicht vorzugsweise gegenüber liegt), eine Bodenplatte und wenigstens einen Chip, wobei der wenigstens eine Chip mit der ersten Metallschicht des Metall-Keramik-Substrats und die Bodenplatte mit der zweiten Metallschicht des Metall-Keramik-Substrats verbunden ist.

Die Merkmale der Verbindungsschicht des Metall-Keramik-Substrats werden vorzugsweise unter Verwendung der nachstehend beschriebenen Messmethoden bestimmt:

Messmethoden:

*(i) Verfahren zur Bestimmung des Gehalts an den Metallen M1, M2, M3 und Silber in der Verbindungsschicht (Merkmale $M(M1)_{EDX}$, $M(M2)_{EDX}$, $M(M3)_{EDX}$ und $M(Ag)_{EDX}$):*

Der Gehalt an den Metallen M1, M2, M3 und Silber in der Verbindungsschicht wird vorzugsweise wie folgt bestimmt:
In einem ersten Schritt wird aus dem zu untersuchenden Metall-Keramik-Substrat zunächst durch Sägen mit einem Diamantsägeblatt bei niedriger Drehzahl und unter Verwendung eines auf Öl basierenden Schmiermittels (Buehler) senkrecht zu einer durch die von der Metallschicht des Metall-Keramik-Substrats aufgespannten Ebene ein quaderförmiger Probenrohling mit einer rechteckigen Grundfläche im Bereich von 100 mm$^2$ bis 400 mm$^2$ ausgeschnitten. Der Probenrohling weist demnach eine Probenoberfläche auf, die der Untersuchung zugeführt wird. Diese Probenoberfläche verläuft mithin senkrecht zu der vor dem Sägen durch die von der Metallschicht des Metall-Keramik-Substrats aufgespannten Ebene. Sie weist daher Anteile an dem Keramikkörper, der Metallschicht und der dazwischenliegenden Verbindungsschicht auf. Der Probenrohling wird zunächst in einer Gussform mit einem Epoxidharz mit geringer Schrumpfung (Epo-Fix, Struers) eingebettet, wobei die Probenoberfläche senkrecht zur Formwand orientiert ist. Anschließend wird das Epoxidharz bei Raumtemperatur ausgehärtet. Nach der Aushärtung wird die Probenoberfläche des Probenrohlings mit einer automatisierten Poliervorrichtung (Tegrapol, Struers) mechanisch poliert, um eine Rauigkeit von 1 $\mu$m oder weniger zu erreichen.

In einem zweiten Schritt wird die polierte Probenoberfläche mittels einer Metallsputtervorrichtung (Q150T, Quorum Technologies) mit Iridium in einer Dicke von 1 - 5 nm leitfähig beschichtet.

In einem dritten Schritt wird eine Analysezone auf der Probenoberfläche mittels Raster-Elektronenmikroskopie - energiedispersiver Röntgenspektroskopie (SEM-EDX) untersucht. Bei SEM-EDX wird ein fokussierter Primär-Elektronenstrahl punktweise über die Probenoberfläche geführt (gerastert). Die gestreuten Elektronen werden mit einem Detektor erfasst, wobei die Elektronenzahl pro Bildpunkt ein mikroskopisches Abbild der Probenoberfläche in Graustufen ergibt. Zusätzlich regt der Primär-Elektronenstrahl die Probe zur Emission von charakteristischer Röntgenstrahlung an, wobei die Elemente in der Probe und deren Gewichtsanteil durch die Analyse des Energiespektrums mit einem EDX-Detektor bestimmt werden kann. Für die Untersuchung werden ein Raster-Elektronenmikroskop (JSM-6060 SEM, JEOL Ltd) mit einem Silizium Drift EDX Detektor (NORAN, Thermo Scientific Inc) und eine Analysesoftware (Pathfinder Mountaineer EDS System, zum Beispiel Version 2.8, Thermo Scientific Inc) verwendet. Für die Raster-Elektronenmikroskopie werden folgende Einstellungen verwendet: Vergrößerung: 1000fach, Beschleunigungsspannung = 15 kV, Arbeitsabstand = 10 mm, Spotgröße (50 - 60) (eingestellt, um 25% +/- 5% der Totzeit des EDX-Detektors zu erreichen).

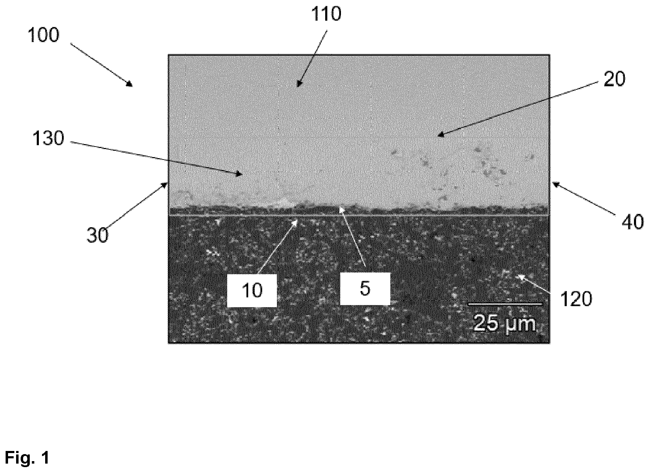

In einem vierten Schritt wird die Probenoberfläche mit der EDX Software als elektronenmikroskopische Aufnahme (Rückstreuelektronenmodus; Backscattered Electron Micrograph) erfasst. Dabei wird ein rechteckiges Sichtfeld von wenigstens 125 $\mu$m (horizontal) x 90 $\mu$m (vertikal) erhalten, wobei die Analysezone unter Verwendung der Punktanalysefunktion der EDX-Software definiert wird. Die Analysezone lässt sich unter Bezugnahme auf Fig. 1 wie folgt beschreiben:

a) Die Probenoberfläche ist so orientiert, dass sich in der elektronenmikroskopischen Aufnahme 100 der Ausschnitt des Keramikkörpers 120 unten und der Ausschnitt der Metallschicht 110 oben befindet. In der elektronenmikroskopischen Aufnahme 100 ist ein Übergang 5 zwischen dem Keramikkörper (dunkel) 120 und der Verbindungsschicht bzw. Metallschicht (hell) 110 sichtbar. Die untere Begrenzungslinie 10 des Rechtecks der Analysezone 130 wird durch eine zu diesem Übergang 5 parallele Linie beschrieben, die unmittelbar an diesem Übergang 5 ausschließlich durch den Keramikkörper 120 verläuft.

b) In dieser Orientierung wird die Probenoberfläche auf die Gegenwart eines Metalls M2 mit einem Schmelzpunkt mit weniger als 700°C und auf die Gegenwart eines Aktivmetalls M3 untersucht. Dabei wird das Graustufenbild der elektronenmikroskopischen Aufnahme 100 innerhalb der Verbindungsschicht bzw. Metallschicht 110 untersucht, wobei das Metall M2 die hellsten Pixel und das Metall M3 die dunkelsten Pixel (unter Ausschluss des Keramikkörpers) aufweist. Eine in der elektronenmikroskopischen Aufnahme 100 zur unteren Begrenzungslinie 10 des Rechtecks der Analysezone 130 parallele Linie, die die durch den am weitesten entfernten Punkt verläuft, an dem entweder Metall M2 mit einem Schmelzpunkt von weniger als 700°C oder Metall M3 detektiert wird, bildet die obere Begrenzungslinie 20 des Rechtecks der Analysezone 130.

c) Die linke Begrenzungslinie 30 und die rechte Begrenzungslinie 40 des Rechtecks der Analysezone 130 verlaufen zueinander parallel in einem Abstand, der einem Abstand der Begrenzungslinien des Sichtfelds (vorzugsweise 125 $\mu$m) auf der Probenoberfläche entspricht, und senkrecht zur unteren Begrenzungslinie 10 und oberen Begrenzungslinie 20.

In einem fünften Schritt wird das EDX-Spektrum unter Verwendung der folgenden Einstellungen des EDX-Detektors erfasst: Live Time = 30 s, Rate = auto, Low Energy Cutoff = 100 keV, High Energy Cutoff = Auto (per SEM-Beschleunigungsspannung).

In einem sechsten Schritt wird das Spektrum analysiert. Hierzu werden die zu untersuchenden Elemente ausgewählt und die im Keramikkörper enthaltenen Elemente (deren Gegenwart gegebenenfalls vorab durch eine herkömmliche Untersuchungsmethode bestimmt werden kann), Iridium und Elemente des Epoxidharzes abgewählt. Die Menge jedes der zu untersuchenden Elemente wird in Gewichtsprozent angegeben, wobei die Gesamtmenge 100% entspricht.

Der dritte bis sechste Schritt werden neunmal an unterschiedlichen Stellen wiederholt. Aus den Werten, die aus den insgesamt zehn Einzelmessungen erhalten werden, wird anschließend der Mittelwert bestimmt.

*(ii) Verfahren zur Bestimmung des Verhältnisses vom Gehalt an Element M4 in der Verbindungsschicht zum Gehalt an Metall M2 in der Verbindungsschicht (Merkmal [M(M4)/M(M2)]$_{ICP}$:*

Das Verhältnis [M(M4)/M(M2)]$_{ICP}$ in der Verbindungsschicht des Metall-Keramik-Substrats wird vorzugsweise wie folgt bestimmt:

Das zu untersuchende Metall-Keramik-Substrat wird in einen Kunststoffbecher aus HDPE (High Density Polyethylen), überführt und mit Salzsäure (Konzentration = 30%) und Salpetersäure (Konzentration = 65%) unter geringer Wärmezufuhr versetzt. Zur Auflösung eventueller weiterer unlöslicher Bestandteile wird dem Aufschluss Flusssäure (Konzentration = 40%) zugesetzt. Für herkömmlich dimensionierte Metall-Keramik-Substrate haben sich folgende Säuremengen als vorteilhaft herausgestellt: 30 ml Salzsäure (Konzentration = 30%), 20 ml Salpetersäure (Konzentration = 65%) und 50 $\mu$l Flusssäure (Konzentration = 40%).

Die so erhaltene Probenlösung wird in eine tarierte Polyethylenflasche überführt. Anschließend wird die Probenlösung entsprechend eines Erwartungswertes in Bezug auf den Gehalt des zu untersuchenden Elements mit Wasser verdünnt. Ein Aliquot der Probenlösung wird in einen 100 ml Messkolben überführt, in dem 10 ml Salzsäure (30 Gewichtsprozent), 10 ml Kochsalzpuffer (10 g/l Natriumchlorid) und ein Kalibrierstandard (zum Beispiel eine 1 g/l Yttriumlösung) vorgelegt wurden. Die so erhaltene Messlösung wird mittels ICP-OES (optische Emissionsspektrometrie; Inductively Coupled Plasma - Optical Emission Spectrometry) im Hinblick auf das Verhältnis [M(M4)/M(M2)]$_{ICP}$ gegen den Kalibierstandard vermessen. Hierzu wird das ICP Emissionsspektrometer iCAP 6500 Duo (Thermo Scientific Inc) verwendet, wobei für die Messung folgende Plasmaeinstellungen vorgenommen werden: Spülpumprate (U/min): 35; Analysenpumprate (U/min): 35; Pumpenschlauch-Typ: Tygon Orange/white; HF-Leistung: 1150 W; Zerstäubergas: 0,60 l/min; Hilfsgas: 0,5 l/min. Die vorliegende Erfindung wird durch die nachstehenden Ausführungsbeispiele veranschaulicht, die nicht einschränkend zu verstehen sind.

Ausführungsbeispiele:

*Herstellung von Metall-Keramik-Substraten (Beispiele 1 - 8 und Vergleichsbeispiele 1 - 7):*
In den Beispielen 1 - 8 und den Vergleichsbeispielen 1 - 7 wurden Metall-Keramik-Substrate hergestellt, die sich in der Zusammensetzung der Verbindungsschicht unterschieden. Dabei wurde jeweils ein Stapel enthaltend einen Keramikkörper, eine Metallfolie und ein Lötmaterial, das mit dem Keramikkörper und der Metallfolie in Kontakt steht, bereitgestellt und anschließend erhitzt. Die so erhaltenen Metall-Keramik-Substrate wurden anschließend im Hinblick auf ihre Bondfestigkeit sowie ihre Wärme- und Stromleitfähigkeit verprobt.

Für die Herstellung der erfindungsgemäßen Metall-Keramik-Substrate 1 - 8 sowie für die Vergleichsbeispiele 1 - 7 wurden zunächst Pasten gemäß der in Tabelle 1 angegebenen Zusammensetzungen hergestellt.

**Tabelle** 1:

| Gehalt in Gewichtsproze nt | Cu | Sn | TiH$_2$ | Bi | Organisch es Medium |
|---|---|---|---|---|---|
| Beispiele | | | | | |
| 1 | 68,72 | 18,35 | 3,62 | 0,05 | 9,25 |
| 2 | 64,22 | 22,67 | 3,62 | 0,05 | 9,43 |
| 3 | 73,20 | 13,60 | 3,62 | 0,10 | 9,48 |
| 4 | 73,12 | 13,50 | 3,62 | 0,16 | 9,60 |
| 5 | 71,06 | 15,50 | 3,62 | 0,31 | 9,51 |
| 6 | 74,89 | 11,27 | 3,62 | 0,41 | 9,81 |
| 7 | 72,57 | 13,77 | 3,62 | 0,47 | 9,57 |
| 8 | 67,50 | 18,10 | 3,62 | 0,79 | 10,00 |
| Vergleichsbeispiele | | | | | |
| V1 | 71,59 | 15,29 | 3,62 | 0,00 | 9,49 |
| V2 | 73,31 | 13,60 | 3,62 | 0,03 | 9,45 |
| V3 | 82,35 | 4,83 | 3,62 | 0,05 | 9,14 |
| V4 | 79,95 | 6,78 | 3,62 | 0,17 | 9,48 |

(fortgesetzt)

| Vergleichsbeispiele | | | | | |
|---|---|---|---|---|---|
| V5 | 79,47 | 6,86 | 3,62 | 0,41 | 9,64 |
| V6 | 81,58 | 5,06 | 3,62 | 0,52 | 9,22 |
| V7 | 51,81 | 31,45 | 7,24 | 0,00 | 9,50 |

Hierzu wurden Zinn, Titanhydrid und Bismut als Pulver in den angegebenen Mengen nacheinander in die angegebene Menge des organischen Vehikels enthaltend Texanol eingebracht und bei 35 Hz für 20 Minuten in einem Standmischgerät so lange gemischt, bis jeweils eine homogene Paste erhalten wurde. Danach wurde das Kupferpulver in Inkrementen zugegeben. Die so erzeugte Mischung wurde so lange gerührt, bis eine homogene Paste erhalten wurde.

Mit den so hergestellten Pasten wurden Keramikkörper an ihren gegenüberliegenden Oberflächen beidseitig mit Kupferfolien verbunden. Hierzu wurden jeweils Keramikkörper mit den Abmessungen 177,8 x 139,7 x 0,32 mm (erhalten von Toshiba Materials) verwendet, die eine identische Vorder- und Rückseitenbeschaffung aufwiesen. Die jeweilige Paste wurde mittels eines 165 Mesh-Siebs auf einen Bereich der Abmessung 137 x 175 mm$^2$ auf die Rückseite eines solchen Keramikkörpers siebgedruckt und für 15 Minuten bei 125°C vorgetrocknet. Die Pastendicke nach der Vortrocknung betrug 35 +/- 5 $\mu$m. Danach wurde die so erzeugte Anordnung herumgedreht, die Paste gleichermaßen auf die Vorderseite des Keramikkörpers gedruckt und vorgetrocknet. Anschließend wurde die beidseitig mit Paste versehene Keramik beidseitig mit Kupferfolie aus sauerstofffreiem, hochleitfähigem Kupfer mit einer Reinheit von 99,99% und einer Abmessung von 174 x 137 x 0.3 mm versehen, um einen Stapel mit folgendem Aufbau zu erhalten: Kupferfolie - vorgetrocknete Paste - Keramik - vorgetrocknete Paste - Kupferfolie.

Der Stapel wurde sodann in einem Durchlaufofen erhitzt. Hierzu wurde auf die Transportkette eines Durchlaufofens zunächst eine Siliziumcarbidplatte gelegt, auf die eine Graphitfolie aufgebracht wurde. Auf der Graphitfolie wurde der Stapel platziert, der danach mit einer weiteren Graphitfolie abgedeckt und mit einer weiteren Siliziumcarbidplatte (Gewicht = 600 g) beschwert wurde. Der Aufbau wurde anschließend auf der Transportkette durch die Heizzone eines Durchlaufofens transportiert und innerhalb von 25 min ausgehend von 50°C auf eine Spitzentemperatur von 935°C (gemessen mit einem Thermoelement vom Typ K der Firma Temperatur Messelemente Hettstedt GmbH am Stapel) für 2 min erhitzt. Anschließend wurde die Temperatur des Aufbaus innerhalb von 25 min wieder auf 50°C abgekühlt.

Die so erhaltenen Metall-Keramik-Substrate wurden anschließend auf Raumtemperatur abgekühlt, um Metall-Keramik-Substrate zu erhalten, die jeweils eine Keramikschicht enthielten, die beidseitig mit einer Kupferschicht über eine Verbindungsschicht verbunden war.

*Auswertung:*

Für die Metall-Keramik-Substrate der Beispiele 1 - 8 und der Vergleichsbeispiele 1 - 7 wurden die Werte gemäß Tabelle 2 bestimmt:

**Tabelle 2:**

| Wert | Merkmal | Erläuterung |
|---|---|---|
| (c1) | M(M2)$_{EDX}$ | ■ Mittels EDX bestimmter Gehalt [in Gewichtsprozent] an Zinn (Metall M2) in der Verbindungsschicht. |
| (c2) | [M(M4)/M(M2)]$_{ICP}$ * 1000 Gewichtsprozent + (M2)$_{EDX}$ | ■ [M(M4)/M(M2)]$_{ICP}$: Mittels ICP bestimmtes Verhältnis vom Gehalt an Bismut (Metall M4) in der Verbindungsschicht zum Gehalt an Zinn (Metall M2) in der Verbindungsschicht. |
| | | ■ M(M2)$_{EDX}$: Mittels EDX bestimmter Gehalt [in Gewichtsprozent] an Zinn (Metall M2) in der Verbindungsschicht. |
| (c3) | M(Ag)$_{EDX}$ | ■ Mittels EDX bestimmter Gehalt [in Gewichtsprozent] an Silber in der Verbindungsschicht. |

Ferner wurden an den Metall-Keramik-Substraten der Beispiele 1 -8 und der Vergleichsbeispiele 1 - 7 die Bondfestigkeit mittels Peel Strength Test sowie die Strom- und Wärmeleitfähigkeit bestimmt.

Die Ergebnisse sind in Tabelle 3 dargestellt.

**Tabelle 3:**

|  | (c1) | (c2) | (c3) | Haftfestigkeit | Leitfähigkeit |
|---|---|---|---|---|---|
| Beispiele | | | | | |
| 1 | 13,0 | 15,9 | 0,0 | + | Hoch |
| 2 | 13,9 | 16,2 | 0,0 | + | Hoch |
| 3 | 11,4 | 19,1 | 0,0 | + | Hoch |
| 4 | 11,4 | 23,0 | 0,0 | ++ | Hoch |
| 5 | 12,5 | 32,7 | 0,0 | +++ | Hoch |
| 6 | 10,4 | 46,4 | 0,0 | +++ | Hoch |
| 7 | 11,1 | 45,2 | 0,0 | ++ | Hoch |
| 8 | 13,0 | 56,6 | 0,0 | +++ | Hoch |
| Vergleichsbeispiele | | | | | |
| 1 | 12,0 | 12,0 | 0,0 | - | Hoch |
| 2 | 11,4 | 13,5 | 0,0 | - | Hoch |
| 3 | 5,3 | 16,1 | 0,0 | - | Hoch |
| 4 | 7,6 | 32,4 | 0,0 | - | Hoch |
| 5 | 7,6 | 66,9 | 0,0 | - | Hoch |
| 6 | 5,9 | 109,1 | 0,0 | - | Hoch |
| 7 | 21,8 | 21,8 | 0,0 | ++ | Gering |

Legende:

+++: Haftfestigkeit im Peel Strength Test > 100 N/cm.
++: Haftfestigkeit im Peel Strength Test = 75 bis <100 N/cm.
+: Haftfestigkeit im Peel Strength Test = 40 bis <75 N/cm.
-: Haftfestigkeit im Peel Strength Test < 40 N/cm.

Die Ausführungsbeispiele zeigen, dass Metall-Keramik-Substrate, die die Bedingungen:

(c1)

$$M(M2)_{EDX} = 10 - 20 \text{ Gewichtsprozent,}$$

(c2)

$$15 \text{ Gewichtsprozent} \leq [M(M4)/M(M2)]_{ICP} * 1000 \text{ Gewichtsprozent} + M(M2)_{EDX} \leq 100 \text{ Gewichtsprozent und}$$

(c3)

$$M(Ag)_{EDX} = 0 - 10 \text{ Gewichtsprozent}$$

in Bezug auf die Verbindungsschicht kumulativ erfüllen, eine stabile Verbindung zwischen der Metallschicht und dem Keramikkörper bei gleichzeitig hoher Wärme- und Stromleitfähigkeit aufweisen. Da diese Metall-Keramik-Substrate silberfrei sind, treten darüber hinaus nicht die im Zusammenhang mit einer Silbermigration stehenden Probleme auf. Bei Metall-Keramik-Substraten, die die Bedingungen (c1) und (c2) nicht erfüllen, ergibt sich im Vergleich dazu eine weniger stabile Anbindung der Metallschicht an den Keramikkörper oder die erhaltenen Metall-Keramik-Substrate weisen eine geringe Wärme- und Stromleitfähigkeit auf.

**Patentansprüche**

1. Metall-Keramik-Substrat umfassend

   (a) einen Keramikkörper,
   (b) eine Metallschicht und
   (c) eine Verbindungsschicht, die sich zwischen dem Keramikkörper und der Metallschicht befindet, wobei die Verbindungsschicht

      (i) ein Metall M1 mit einem Schmelzpunkt von wenigstens 700°C,
      (ii) ein Metall M2 mit einem Schmelzpunkt von weniger als 700°C,
      (iii) ein Metall M3, das aus der Gruppe der Aktivmetalle ausgewählt ist, und
      (iv) ein Metall M4, das aus der Gruppe ausgewählt ist, die aus Bismut, Gallium, Zink, Indium, Germanium, Aluminium und Magnesium besteht, aufweist,

   **dadurch gekennzeichnet, dass** die Verbindungsschicht folgende Merkmale aufweist:

   (c1)

   $$M(M2)_{EDX} = 10 - 20 \text{ Gewichtsprozent,}$$

   (c2)

   $$15 \text{ Gewichtsprozent} \leq [M(M4)/M(M2)]_{ICP} * 1000 \text{ Gewichtsprozent} + M(M2)_{EDX} \leq 100 \text{ Gewichtsprozent und}$$

   (c3)

   $$M(Ag)_{EDX} < 10 \text{ Gewichtsprozent,}$$

   wobei:

   $M(M2)_{EDX}$: für den mittels EDX bestimmten Gehalt [in Gewichtsprozent] an Metall M2 in der Verbindungsschicht steht;
   $[M(M4)/M(M2)]_{ICP}$: für das mittels ICP bestimmte Verhältnis vom Gehalt an Metall M4 in der Verbindungsschicht zum Gehalt an Metall M2 in der Verbindungsschicht steht; und
   $M(Ag)_{EDX}$ für den mittels EDX bestimmten Gehalt [in Gewichtsprozent] an Silber in der Verbindungsschicht steht.

2. Metall-Keramik-Substrat gemäß Anspruch 1, **dadurch gekennzeichnet, dass** die Keramik des Keramikkörpers aus der Gruppe ausgewählt ist, die aus Aluminiumnitridkeramiken, Siliziumnitridkeramiken und Aluminiumoxidkeramiken besteht.

3. Metall-Keramik-Substrat gemäß Anspruch 1 oder 2, **dadurch gekennzeichnet, dass** das Metall der Metallschicht Kupfer ist.

4. Metall-Keramik-Substrat gemäß einem der vorangegangenen Ansprüche, **dadurch gekennzeichnet, dass** das Metall M1 Kupfer ist.

5. Metall-Keramik-Substrat gemäß einem der vorangegangenen Ansprüche, **dadurch gekennzeichnet, dass** das Metall M2 Zinn ist.

6. Metall-Keramik-Substrat gemäß einem der vorangegangenen Ansprüche, **dadurch gekennzeichnet, dass** das Metall M3 aus der Gruppe ausgewählt ist, die aus Hafnium, Titan, Zirkonium, Niob, Tantal, Vanadium und Cer besteht.

7. Metall-Keramik-Substrat gemäß einem der vorangegangenen Ansprüche, **dadurch gekennzeichnet, dass** das Metall M4 Bismut ist.

8. Metall-Keramik-Substrat gemäß einem der vorangegangenen Ansprüche, **dadurch gekennzeichnet, dass** die Verbindungsschicht folgendes Merkmal aufweist:

   (c1')

$$M(M2)_{EDX} = 10 - 15 \text{ Gewichtsprozent}$$

9. Metall-Keramik-Substrat gemäß einem der vorangegangenen Ansprüche, **dadurch gekennzeichnet, dass** die Verbindungsschicht folgendes Merkmal aufweist:

   (c2')

$$15 \text{ Gewichtsprozent} \leq [M(M4)/M(M2)]_{ICP} * 1000 \text{ Gewichtsprozent} + M(M2)_{EDX} \leq 70 \text{ Gewichtsprozent}.$$

10. Metall-Keramik-Substrat gemäß einem der vorangegangenen Ansprüche, **dadurch gekennzeichnet, dass** die Verbindungsschicht folgendes Merkmal aufweist:

   (c3')

$$M(Ag)_{EDX} < 1 \text{ Gewichtsprozent}.$$

11. Verfahren zur Herstellung eines Metall-Keramik-Substrats umfassend die Schritte:

   a) Bereitstellen eines Stapels enthaltend

   a1) einen Keramikkörper,
   a2) eine Metallfolie und
   a3) ein Lötmaterial, das mit dem Keramikkörper und der Metallfolie in Kontakt steht, wobei das Lötmaterial umfasst:

   (i) ein Metall M1 mit einem Schmelzpunkt von wenigstens 700°C,
   (ii) ein Metall M2 mit einem Schmelzpunkt von weniger als 700°C,
   (iii) ein Metall M3, das aus der Gruppe der Aktivmetalle ausgewählt ist, und
   (iv) ein Metall M4, das aus der Gruppe ausgewählt ist, die aus Bismut, Gallium, Zink, Indium, Germanium, Aluminium und Magnesium besteht, und

   b) Erhitzen des Stapels unter Erhalt eines Metall-Keramik-Substrats.

12. Modul aufweisend ein Metall-Keramik-Substrat gemäß einem der Ansprüche 1 - 10.

Fig. 1

**Europäisches Patentamt**
**European Patent Office**
**Office européen des brevets**

# EUROPÄISCHER RECHERCHENBERICHT

Nummer der Anmeldung

**EP 21 21 0702**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 906 897 A (TANAKA TOMOO [JP] ET AL) 25. Mai 1999 (1999-05-25) * sample 16; Tabellen 1,2 * | 1,2,4, 8-12 | INV. C04B37/02 B23K35/30 |
| X,D | DE 10 2017 114893 A1 (ROGERS GERMANY GMBH [DE]) 10. Januar 2019 (2019-01-10) * Absätze [0007], [0008]; Ansprüche 1,8 * | 11 | |
| X | US 4 603 090 A (MIZUHARA HOWARD [US]) 29. Juli 1986 (1986-07-29) * Beispiel 2 * | 11 | |
| X | US 3 949 118 A (NAGANO KENTARO ET AL) 6. April 1976 (1976-04-06) * Muster 12; Tabelle 1 * | 1,5,6, 8-12 | |
| X | GB 1 357 073 A (ASAHI GLASS CO LTD) 19. Juni 1974 (1974-06-19) * Muster 12; Tabelle 1 * | 1,4-6, 8-12 | RECHERCHIERTE SACHGEBIETE (IPC) |
| X | DE 23 08 041 A1 (ASAHI GLASS CO LTD) 23. August 1973 (1973-08-23) * Muster 5; Tabelle 1 * | 1,5-7, 9-12 | C04B B23K |
| X | CN 113 528 884 A (CHINA UKRAINE INST OF WELDING GUANGDONG ACADEMY OF SCIENCES) 22. Oktober 2021 (2021-10-22) * Anspruch 8; Beispiele 1-5 * | 1-6,8-12 | |
| X | SU 631 288 A1 (VNI INSTRUMENT INST [SU]) 5. November 1978 (1978-11-05) * Spalte 3, Zeile 35 – Spalte 4, Zeile 28 * | 1,2,4-6, 8-12 | |

Der vorliegende Recherchenbericht wurde für alle Patentansprüche erstellt

| Recherchenort | Abschlußdatum der Recherche | Prüfer |
|---|---|---|
| Den Haag | 12. April 2022 | Raming, Tomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 21 0702

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2022

| Im Recherchenbericht angeführtes Patentdokument | Datum der Veröffentlichung | Mitglied(er) der Patentfamilie | Datum der Veröffentlichung |
|---|---|---|---|
| US 5906897 A | 25-05-1999 | EP 0786306 A2 | 30-07-1997 |
| | | JP 3364402 B2 | 08-01-2003 |
| | | JP H09262691 A | 07-10-1997 |
| | | US 5906897 A | 25-05-1999 |
| DE 102017114893 A1 | 10-01-2019 | CN 110891733 A | 17-03-2020 |
| | | DE 102017114893 A1 | 10-01-2019 |
| | | EP 3609647 A1 | 19-02-2020 |
| | | JP 2020527461 A | 10-09-2020 |
| | | KR 20200027529 A | 12-03-2020 |
| | | US 2020384579 A1 | 10-12-2020 |
| | | WO 2019008003 A1 | 10-01-2019 |
| US 4603090 A | 29-07-1986 | KEINE | |
| US 3949118 A | 06-04-1976 | KEINE | |
| GB 1357073 A | 19-06-1974 | KEINE | |
| DE 2308041 A1 | 23-08-1973 | DE 2308041 A1 | 23-08-1973 |
| | | FR 2172423 A1 | 28-09-1973 |
| | | GB 1371738 A | 23-10-1974 |
| | | JP S4885459 A | 13-11-1973 |
| | | JP S5221980 B2 | 14-06-1977 |
| | | NL 7301849 A | 21-08-1973 |
| CN 113528884 A | 22-10-2021 | KEINE | |
| SU 631288 A1 | 05-11-1978 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3744120 A
- DE 2319854 C2
- JP 4812985 B
- DE 102017114893 A1